# EUROPEAN PATENT APPLICATION

(11) **EP 2 666 595 A1**
(43) Date of publication of application: **27.11.2013**
(21) Application number: 12168836.0
(22) Date of filing: 22.05.2012
(51) Int. Cl.: B25F 5/00

(54) **planetary gear assembly with protection clutch**

(71) Applicant: ROBERT BOSCH GMBH, 70442 Stuttgart (DE)
(72) Inventor: Lister, John, Bury St. Edmunds, IP32 7PT (GB); Beadman, Robert, Stowmarket, Suffolk, IP14 2AU (GB); Fowles, Andrew, Colchester, Essex, Longridge Park (GB); Heywood, Peter, Norton IP31 3LE (GB); Malik, Istvan, 1133 Budapest (HU); Wilkins, Richard, Stowmarket, Suffolk IP14 1EY (GB)

(57) **Abstract**

The present invention relates to a planetary gear assembly (10) with a protection clutch, in particular a slipping protection clutch, especially a planetary gearbox for an electric hand tool such as a hedgecutter. We describe a planetary or epicyclic gear assembly including a tolerance ring clutch (30) and a housing (11). The planetary gear comprises first and second stages. The first stage includes a first sun gear (13); first planet gears (15) mounted to a first planet carrier (20); and a first ring gear (14). The second stage includes a second sun gear (21); second planet gears (22) mounted to a second planet carrier (23); and a second ring gear (25). One of the first and second ring gears (14, 25) is rotationally fixed with respect to the housing (11) and the tolerance ring (30) is provided radially intermediate the other ring gear and the housing.

## Description

The present invention relates to a protection clutch, in particular a slipping protection clutch, more particularly a clutch for a planetary gearbox, especially a planetary gearbox for an electric hand tool such as a hedgecutter.

Hedgecutters are hand-held apparatus comprising a pair of elongate aligned toothed blades of which at least one is caused to reciprocate continously by means of an electric motor or a small petrol engine. Branches of a hedge fall, in use, between adjacent teeth of one of the blades and are cut by the passing motion of the other blade.

Hedgecutters inevitably come into contact with metal fencing and steel wire and other obstructions. At working speed, the motor rotor has high rotational energy. If this were brought to a sudden stop, the transmitted torque would be sufficiently high to cause potentially catastrophic damage to the apparatus. High-end hedgecutters therefore include a slipping clutch to protect the drive and cutting means. Typically, the slipping clutch is set at about 30Nm. If the drive system is blocked, the drive can continue to rotate by about one cycle, typically about fifteen turns of the motor.

A slipping clutch is typically provided as a separate element of the drivetrain of an apparatus. This adds both weight and size to the apparatus. The present invention seeks to provide a solution to these problems.

In its broadest sense the present invention provides a planetary gear assembly comprising an integral protection or slipping clutch. More particularly, the present invention provides a planetary or epicyclic gear assembly including a tolerance ring clutch and a housing; wherein the planetary gear comprises first and second stages, wherein the first stage includes a first sun gear; first planet gears mounted to a first planet carrier; and a first ring gear rotationally fixed with respect to the housing; and wherein the second stage includes a second sun gear; second planet gears mounted to a second planet carrier; and a second ring gear. The present invention is **characterised in that** one of the first and second ring gears is rotationally fixed with respect to the housing in that the tolerance ring is provided radially intermediate the other ring gear and the housing.

Advantageously, the first planet carrier and the second sun gear are formed as a single component.

Optionally, the gear assembly comprises further gear stages. In preferred embodiments, the gear assembly is a two-stage gear.

The present invention also provides a power tool comprising a gear assembly as described above and further comprising an electric motor having an output shaft or pinion operatively coupled to or formed with the first sun gear.

Advantageously, the power tool further comprises a working tool actuated, in use, through a drive shaft wherein the second planet carrier is mountable to the drive shaft.

The above and other aspects of the invention will now be described in further detail, by way of example only, with reference to the accompanying drawings, in which:

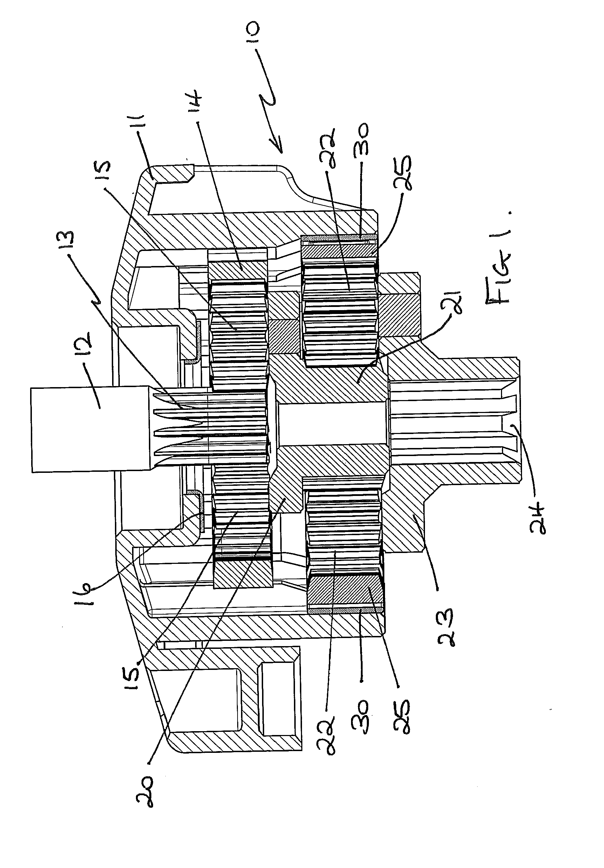

Figure 1 is a cross-sectional view of a gear assembly in accordance with the present invention; and

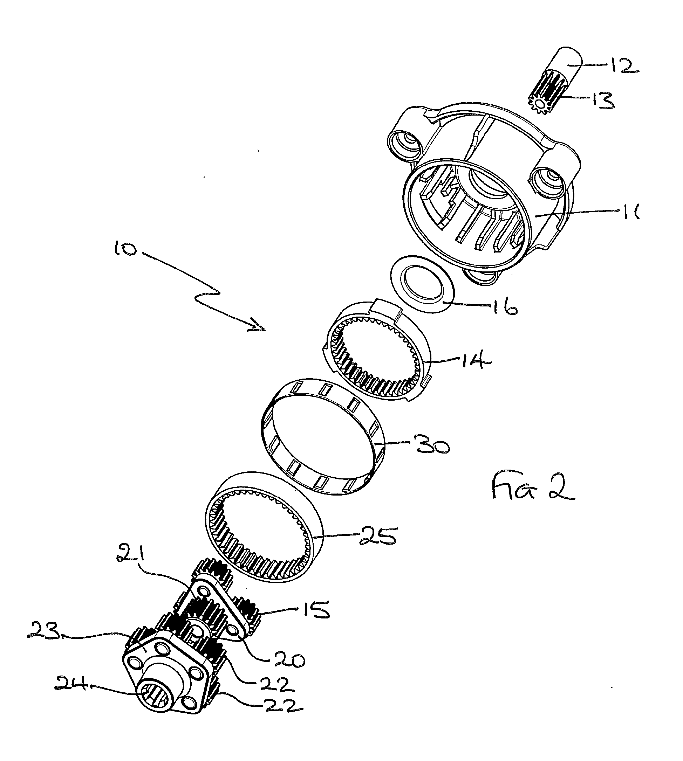

Figure 2 is an exploded perspective view of the gear assembly of Figure 1.

With reference to the figures, there is shown a two-stage planetary gear assembly 10 including an upper housing 11. The gear assembly 10 further includes a lower housing which may be formed by a component of the apparatus into which the gear is to be assembled and so is omitted here.

The gear assembly has an input shaft 12 providing a gear 13 forming the sun gear of the first stage of the planetary gear; and a ring gear 14 rotationally fixed with respect to upper housing 11, for example by keying. Planet gears 15 of the first stage are mounted to first stage planet carrier 20 to be rotatable within ring gear 14. A washer 16 is provided longitudinally between first stage planet gears 15 and an adjacent portion of housing 11.

First stage planet carrier 20 also forms, in the embodiment shown of a compact gear assembly, the sun gear 21 of the second stage planetary gear. Similarly, second stage planet gears 22 are supported on a second stage planet carrier 23 which also includes, in the embodiment shown, an output coupling 24 for engagement with the input shaft of a tool, such as the drive shaft of a hedgecutter blade assembly or other working tool.

Although indicated above with respect to hedgecutters, the improvement is equally suitable for inclusion in planetary gear drives for other tools. Those tools can typically be characterised as those in which the inertia of the rotating parts contributes significantly to the ability of the machine to perform its role, typically a cutting role, and in which there also exists the possibility of the cutting system being brought to a dead stop from high speed, including lawnmowers and shredders.

In the case of the hedgecutter, the momentary peak loads during the cutting of thicker branches are overcome by the rotational energy of the motor. Even though the motor itself is relatively small, it runs at high speed (and it will be appreciated that its rotational energy is based on the square of the speed). In the event of this being insufficient to complete a cut, the blades will nevertheless be brought to a sudden stop. This event could produce an extremely high torque at the gearbox output/blade drive input easily capable of destroying the drive system if a slipping clutch such as that described herein were not included in the design. As noted, such clutches are customarily set to cap the maximum blade drive input torque to 30 - 50Nm.

The second stage also includes second stage ring gear 25. Radially intermediate ring gear 25 and the adjacent portion of the gear housing is, in accordance with the present invention, a tolerance ring 30.

In an alternative embodiment, not shown, the tolerance ring 30 is positioned intermediate first ring gear 14 and its adjacent housing and second ring gear 25 is rotationally fixed with respect to housing 11.

Advantageously, location of tolerance ring 30 in this position does not extend the overall length of the gearbox construction. Neither need there by any weight gain.

## Claims

1. A planetary or epicyclic gear assembly including a tolerance ring clutch and a housing; wherein the planetary gear comprises first and second stages, wherein the first stage includes a first sun gear; first planet gears mounted to a first planet carrier; and a first ring gear rotationally fixed with respect to the housing; and wherein the second stage includes a second sun gear; second planet gears mounted to a second planet carrier; and a second ring gear; **characterised in that** one of the first and second ring gears is rotationally fixed with respect to the housing and **in that** the tolerance ring is provided radially intermediate the other ring gear and the housing.

2. A gear assembly as claimed in claim 1 wherein the first planet carrier and the second sun gear are formed as a single component.

3. A gear assembly as claimed in claim 1 or claim 2 wherein the gear assembly comprises further gear stages.

4. A power tool comprising a gear assembly as claimed in any one of claims 1 to 3 and further comprising an electric motor having an output shaft or pinion operatively coupled to or formed with the first sun gear.

5. A the power tool as claimed in claim 4 comprising a drivable working tool drivable, in use, through a drive shaft wherein the second or final planet carrier is mountable to the drive shaft.
